# EUROPEAN PATENT APPLICATION

(11) **EP 0 664 538 A1**
(43) Date of publication of application: **26.07.1995**
(21) Application number: 95200059.4
(22) Date of filing: 11.01.1995
(51) Int. Cl.: G11B 5/02, G11B 5/86

(54) **Calibration system with a calibration device for the calibration of a recording arrangement**

(30) Priority: 20.01.1994 BE 9400065
(71) Applicant: PHILIPS ELECTRONICS N.V., 5621 BA Eindhoven (NL)
(72) Inventor: Ruigebregt, Lourens John, NL-5656 AA Eindhoven (NL); Sillen, Peter Johannes Theodorus, NL-5656 AA Eindhoven (NL)
(74) Representative: van der Kruk, Willem Leonardus

(57) **Abstract**

The invention relates to a calibration system (1,2,7) comprising a calibration device (1,7) for calibrating a recording arrangement (2). The recording arrangement (2) is adapted to produce prerecorded record carriers (3) in tape form and for this purpose it comprises a recording head (19) for recording information in a track on the record carrier (3). To this end a blank record carrier is moved at a high speed from a supply reel (4) to a take-up reel (5) past the recording head (19). Write means (20,22,15) serve for generating a write current for the recording head (19). The calibration device (1,7) has a read head (7) for reading information from the track on the record carrier (3) and comprises detection means (40,42,44,46,50) for detecting the signal level of the information read from the record carrier (3), and control signal generator means (50) for generating a control signal in dependence on the signal level, and for applying the control signal to the write means (20,22,15) in order to control the write current from the write means to the recording head.

Generator means (20,21) serve for generating a first calibration signal having a given first fequency value and for generating a second calibration signal having a given second frequency value unequal to the first frequency value. The write current for recording the first calibration signal is controlled in such a manner that the first calibration signal recording with this write current and subsequently read has a signal level which is substantially equal to a reference signal level within a first reference signal level range. After this, the second calibration signal is recorded with the write current thus adjusted and is subsequently read.

## Description

The invention relates to a calibration system comprising a calibration device and a recording arrangement, the calibration device being adapted to calibrate the recording arrangement, and the recording arrangement being adapted to produce prerecorded record carriers in tape form and comprising for this purpose a recording head for recording information in a track on the record carrier, the recording arrangement further comprising a take-up reel and a supply reel, transport means for the transport of the record carrier from the supply reel to the take-up reel past the recording head, and write means for generating a write current for the recording head, the calibration device comprising a read head for reading information in the track on the record carrier, detection means for detecting the signal level of the information reproduced from the record carrier, and control signal generator means for generating a control signal in dependence on the signal level and for applying the control signal to the write means, in order to control the write current from the write means to the recording head. The invention also relates to a calibration device, a recording arrangement and a test record carrier which are suitable for use in the calibration system, and to a method of carrying out the calibration.

A recording arrangement for obtaining, for example, prerecorded record carriers in the form of tapes may be a recording arrangement for obtaining magnetic record carriers of the DCC type. Such a recording arrangement is known from European Patent Applications EP-A 455,293 and EP-A 456,299, *i.e.* the documents (1) and (2) in the list of documents appended to the present Application.

A calibration system for such a recording arrangement is necessary in order to obtain prerecorded record carriers complying with a certain quality standard. The reason for this is that reproducing apparatuses (for example of the DCC type) should be capable of playing back all the prerecorded record carriers (of the DCC type) manufactured all over the world, for which purpose the signal characteristic of the signal reproduced from a prerecorded record carrier by means of a reproducing apparatus should be within given margins.

It is an object of the invention to provide such a calibration system and to propose additional measures by means of which a faster calibration is possible.

The calibration system in accordance with the invention is characterised in that the calibration system comprises generator means for generating a first calibration signal having a given first frequency value and for generating a second calibration signal having a given second frequency value unequal to the first frequency value, in response to a first control signal and a second control signal, respectively, from the calibration device,
in that in a calibration mode,
(a) viewed in the transport direction of the record carrier, the read head is brought into read contact with the record carrier downstream of the recording head,
(b1) in that the recording arrangement is adapted to record the first calibration signal in the track on the record carrier in response to the first control signal,
(b2) the calibration device is adapted to read the first calibration signal recorded in the track,
(b3) the detection means in the calibration device are adapted to detect the signal level of the first calibration signal read from the track, in order to generate the control signal in dependence on the signal level of the first calibration signal read from the track,
(b4) in that the calibration device is adapted to control the write current in dependence on the control signal in such a manner that the signal level of the first calibration signal read from the track is within a reference signal level range,
(c1) in that the recording arrangement is adapted to record the second calibration signal, with the write current thus adjusted, in the track on the record carrier in response to the second control signal,
(c2) the calibration device is adapted to read the second calibration signal recorded in the track,
(c3) the detection means in the calibration device are adapted to detect the signal level of the second calibration signal read from the track, and to detect whether the ratio between the signal level of the second calibration signal read from the track and the final signal level of the first calibration signal read from the track is within a reference ratio range,
(d1) in that the calibration device is further adapted to generate again a first control signal in the case that the ratio is outside the reference ratio range,
(d2) in that the calibration device is adapted to adjust the write current in dependence on the control signal,
(d3) the recording arrangement is adapted to re-record the first calibration signal in the track with the adjusted write current,
(d4) in that the adjusted write current is such that the signal level of the first calibration signal which is again read from the track has another value than the first-mentioned final value and lies within the reference signal level range,
(d5) in that the calibration device is adapted to read the first calibration signal recorded with the adjusted write current,
(d6) the detection means are adapted to detect the signal level of this first calibration signal read from the track,
(e) in that the calibration system is adapted to proceed with the calibration mode from step (c1),
(f) in that the calibration device is further adapted to terminate the calibration mode for the track in the case that the ratio is within the reference ratio range.. By means of such a calibration system it is possible to optimise the write current for the write head for two frequencies within the frequency spectrum of the signals as read from a track, the write current for the recording head being the parameter to be controlled. It is obvious that the calibration method may be repeated for other tracks on the record carrier.

As stated hereinbefore, the write current can be controlled in such a manner in the step (b4) that the signal level of the first calibration signal read from the track is within a reference signal level range. In fact, this may imply that in the step (b4) the write current is corrected in such a manner that the signal level of the first calibration signal read from the track is substantially equal to a reference signal value, which value is then included in the reference signal level range.

There are various methods of determining the reference signal level range, the reference ratio range and, if applicable, the reference signal value. If these values are known this is possible, for example, by loading them into the calibration device. However, if this information is not available, these can be derived in another manner.

To this end the calibration system is characterised in that the calibration device is adapted to read a test record carrier in a precalibration mode, in which test record carrier the first calibration signal and the second calibration signal have been recorded, in that the detection means in the calibration device are adapted to detect the signal level of the first calibration signal read from a track on the test record carrier, to derive from the detected signal level values which are characteristic of the reference signal level range and to store these values, in that the detection means in the calibration device are further adapted to detect the signal level of the second calibration signal read from a track on the record carrier, to derive from the detected signal levels of the first and the second calibration signal values which are characteristic of the reference ratio range and to store these values, which detection means may also be adapted to derive the reference signal value from the detected signal level of the first calibration signal. By means of a test record carrier and, if available, any additional data the above-mentioned data can be obtained in a precalibration step. At the same time this provides compensation for the offset of the calibration device itself.

If the read head comprises a plurality of sub-heads, each sub-head being intended for reading an associated track on the test record carrier, the precalibration mode will have to be repeated for each of the sub-heads.

It is very advantageous if the read head in the calibration device is a read head for reading all the tracks on one side of a record carrier. Particularly if the read head can read all the tracks on a record carrier, such as the test record carrier, the precalibration mode needs to be carried out only once, which significantly reduces the overall calibration time. Moreover, the first and second calibration signals should then be stored in only one track of the test record carrier.

Preferably, the test record carrier is provided with a third calibration signal having a third frequency stored in at least two tracks on one side of the test record carrier and, in an azimuth adjustment mode prior to the precalibration mode, the calibration device is adapted to read the third calibration signal in the at least two tracks in order to adjust the azimuth of the read head to a nominal azimuth value. This enables the read head to be positioned correctly before the precalibration mode is carried out. Positioning is effected by varying the direction of the read gap of the read head so as to maximize the output signal read from the tracks. This has the advantage that the subsequent calibration can be carried out with maximal signal levels. Preferably, the at least two tracks extend at the two outermost edges of the side of the record carrier. This simplifies the azimuth adjustment of the read head.

It may occur that a recording arrangement cannot be calibrated, for example, because the recording head is no longer in proper working order. An example of this is an excessively worn recording head. In the absence of an interruption algorithm the calibration system would then continue, in vain, to find an optimum write current. In order to preclude this the calibration device is adapted to count the number of times that the calibration mode has been carried out from step (c1), and to stop the calibration mode if this number exceeds a given value. Obviously, it is also possible to count the total number of times that the step (c1) is carried out in order to determine the moment of interruption.

The test record carrier may be characterised in that one side of the record carrier is provided with blocks which succeed one another, each block having a first block portion containing the first calibration signal recorded in a track and a second block portion containing the second calibration signal recorded in the same track. By means of such a test record carrier it is possible to derive the afore-mentioned values in the precalibration mode.

The test record carrier may be further characterised in that each block has a third block portion containing the third calibration signal recorded in two adjacent tracks. Thus, it is possible, prior to the precalibration mode, to optimise the azimuth of the read head relative to the tracks to be read.

The test record carrier may be further characterised in that an interblock gap is provided between the block portions in the blocks. Thus the calibration device can detect when the next block section with a given calibration signal is read out.

The foregoing is based on a (first) embodiment which in the step (c3) ascertains whether the ratio between the signals levels of the reproduced first and second calibration signals is within a given reference ratio range. However, there is an alternative embodiment which checks in the step (c3) whether the signal level of the reproduced second calibration signal is within a second reference signal level range. If it is within this range calibration is discontinued. If it is not within this range the write current is corrected again, in such a manner that, if the first calibration signal were recorded again with the corrected write current, the reproduced signal level would still be within the associated (first-mentioned) reference signal level range. Subsequently, the second calibration signal is recorded again with the corrected write current and it is again ascertained whether the signal level of the reproduced second calibration signal is within the second reference signal level range. It is to be noted that it may not be necessary to record the first calibration signal with the corrected write current. This is the case if it has already been ascertained in another manner that the corrected write current results in a signal level of the reproduced first calibration signal within the first-mentioned reference signal level range.

It will be evident that the various steps described and defined in the sub-claims based on the first embodiment can also be used in the second embodiment.

These and other objects of the invention will be described in more detail with reference to the following drawings. In the drawings
Figure 1 shows diagrammatically an embodiment of the calibration system,
Figure 2 shows a more detailed variant of the embodiment shown in Figure 1,
Figure 3 shows a part of the test record carrier which can be used in the precalibration mode,
Figure 4 is a flow chart of the precalibration mode,
Figure 5a shows a first part of a flow chart of a variant of the calibration method,
Figure 5b shows the second part of the flow chart of the calibration method,
Figures 6a, 6b and 6c show some signal waveforms required for recording the first and the second calibration signal in the record carrier, and
Figures 7a and 7b show a first and a second part of a flow chart of a second variant of the calibration method.

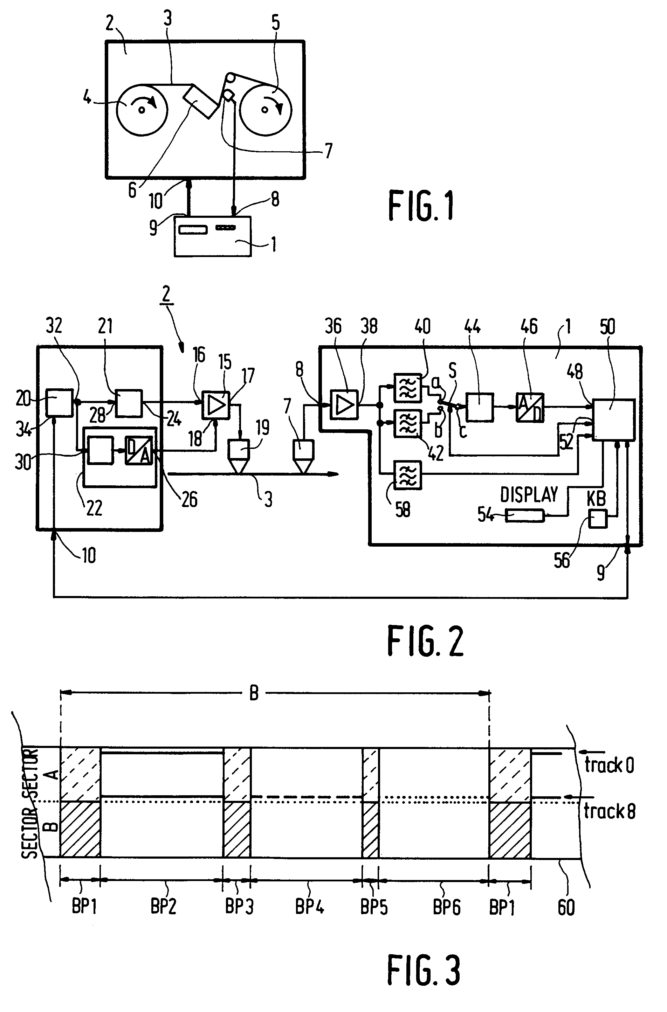

Figure 1 shows a calibration system comprising a calibration device 1 and a recording arrangement 2. The recording arrangement 2 is referred to as a "slave" and used for the production of prerecorded record carriers. For this purpose a blank magnetic tape 3 having a great length is fed from a supply reel 4 to a take-up reel 5 past a recording-head device 6. The transport speed of the magnetic tape during the production of prerecorded record carriers is generally higher than the nominal recording and playback speed of the record carrier. Audio information corresponding to stereo information having a given length of time is recorded repeatedly on the blank magnetic tape. In a loading step, which will not be described any further herein, the individual record carriers are cut and loaded into cassettes in order to produce prerecorded cassettes. For more details reference is made to the documents (1) and (2) in the appended reference list. The cassettes mentioned therein are of the DCC type. In that case the recording head device 6 comprises 18 different write heads for recording each of the 18 tracks on both sides of the record carrier 3.

In order to produce prerecorded cassettes which comply with a certain quality standard the recording arrangement 2 should be calibrated. For this purpose there is provided a calibration device 1 comprising a reproducing head 7 which, viewed in the transport direction of the magnetic tape 3, is disposed downstream of the recording head device 6. The head 7 reads the information recorded in the magnetic tape by means of the recording head device 6 and supplies this information to an input 8. The calibration device 1 produces control signals on an output 9, which control signals are applied to an input 10 of the recording arrangement 2.

Figure 2 shows a more detailed variant of the calibration system. The recording arrangement 2 comprises write means in the form of a write amplifier 15 having a signal input 16 to which the signal to be recorded is applied, a signal output 17 on which the amplified signal is available, and a control signal input 18 for receiving a control signal. The output 17 is coupled to a recording head 19, which records the output signal of the write amplifier 15 in the magnetic tape 3, which results in a track with recorded information. The write current with which the signal applied to the input 16 is recorded in the magnetic tape is determined under the influence of the control signal applied to the control signal input 18. The write amplifier 15 and the recording head 19 form part of the recording head device 6. For the purpose of calibration the recording arrangement 2 further includes a microcontroller 20, a signal generator 21 and a control signal generator 22. The signal generator 21 has an output 24 coupled to the signal input 16 of the write amplifier 15 and the control signal generator 22 has an output 26 coupled to the control signal input 18 of the write amplifier 15. The signal generator 21 and the control signal generator 22 have their respective control signal inputs 28 and 30 coupled to an output 32 of the microcontroller 20 *via* a bus such as, for example, an I²C bus. The microcontroller 20 has an input 34 coupled to the input 10 of the recording arrangement 2.

The signal generator 21 is adapted to generate a first calibration signal under the influence of a first control signal applied *via* the input 28. In the present example this first calibration signal is a digital signal having a frequency of 9.6 kHz when it is assumed that the magnetic tape 3 is moved with the nominal transport speed. However, since during calibration the magnetic tape 3 in the present example is moved with an increased speed, which is for example 64 times the nominal speed, a digital signal is recorded with a frequency which is 64 times as high, *i.e*. a frequency of 614.4 kHz. The signal generator 21 is further adapted to generate a second calibration signal under the influence of a second control signal applied *via* the input 28. In the present example this second calibration signal is a digital signal having a frequency of 48 kHz when it is again assumed that the magnetic tape 3 is moved with the nominal transport speed. However, since the transport speed is 64 times the nominal speed a sinusoidal signal having a frequency of 3.072 MHz is generated. These two calibration signals can be recorded after one another in a track on the magnetic tape 3 by means of the recording head 19.

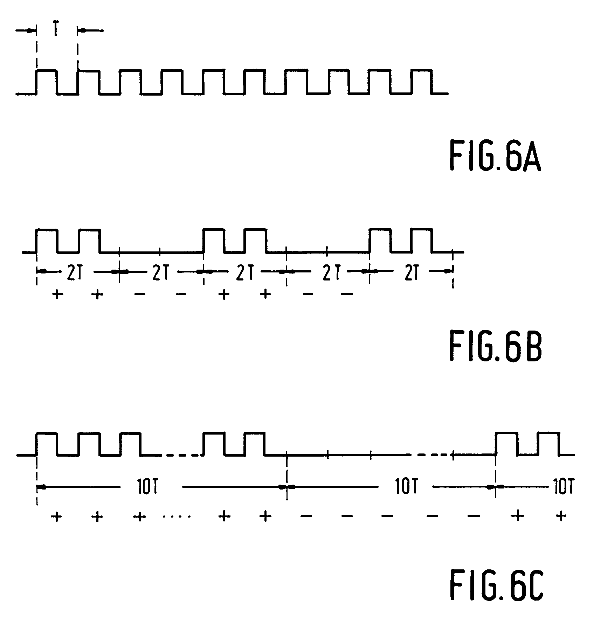

Figures 6a, 6b and 6c show how the calibration signals can be obtained. Figure 6a shows 96 kHz clock signal, T being the period of this 96 kHz clock signal. This clock signal is supplied by a clock signal source (not shown) included in the generator 21. The pulse waveforms shown in Figures 6b and 6c are derived from this clock signal. These pulse waveforms are applied to the write amplifier 15. Under the influence of the pulse waveform in the first clock period T, which waveform is "high" for one half period and "low" for the next half period, the record carrier is magnetised in, for example, a positive direction indicated by the first "plus" sign (+) in Figure 6b. The pulse waveform in the second clock period T is the same as in the first clock period, so that the record carrier is again magnetised in a positive direction indicated by the second "plus" sign (+) in Figure 6b. Under the influence of the "low" signal during the whole third clock period the record carrier is magnetised in a negative direction indicated by the first "minus" sign in Figure 6b. Under the influence of the "low" signal during the whole fourth clock period the record carrier is again magnetised in a negative sense. This is constantly repeated. It is obvious that in the record carrier a signal is recorded whose frequency is a factor of two as low as the frequency of 96 kHz in Figure 6a.

Figure 6c shows the signal applied to the write amplifier to record the first calibration signal. A signal which is "high" for one half of a clock period and "low" for the other half of the clock period is applied to the write amplifier during ten successive clock periods T. According to the foregoing this means that the record carrier is magnetised in the positive direction, as indicated by the "plus" signs in Figure 6c, during ten successive clock periods. In the next ten clock periods the signal is "low" for the entire clock period, which means that the record carrier is magnetised in the negative direction, as indicated by the "minus" signs during these clock periods. Subsequently, this is continually repeated. It is evident that in the record carrier a signal is recorded with a frequency which is a factor of ten as low as the 96 kHz in Figure 6a. In this way the first calibration signal of 9.6 kHz can be recorded in the record carrier.

In the above explanation it has, of course, been assumed that the record carrier is moved with the nominal speed. In the case of recording at a higher speed the frequencies are merely converted to a higher frequency range. However, the explanation as given above remains the same.

Preferably, the two frequency values are selected as follows. It is assumed that a frequency-magnitude characteristic of the signal read from the record carrier is determined without an equalisation being applied. This characteristic may have a flat horizontal portion, which is consequently frequency-independent, and a portion which rolls off as a function of the frequency. One frequency is then situated in the flat portion and the other frequency in the roll-off portion.

The recorded calibration signals are read by means of the reproducing head 7 and are applied to the calibration device 1. The calibration device 1 comprises a read amplifier 36 having an output 38 coupled to inputs of two band-pass filters 40 and 42. In the present example the mid frequencies of the band-pass filters 40 and 42 are equal to the afore-mentioned values of 614.4 kHz and 3.072 MHz, respectively. The band-pass filters 40 and 42 have their outputs coupled to, respectively, a terminal *a* and *b* of a switch S, whose fixed terminal *c* is coupled to an input of a signal detector 44. The signal detector 44 may be, for example, a peak detector. An output of the detector 44 is coupled to an input of an A/D converter 46. An output of the A/D converter 46 is coupled to an input 48 of a microcontroller 50. A switching signal appearing on an output 52 of the microcontroller 50 is applied to the switch S. The switch S is set to position *a-c* or position *b-c* under the influence of this switching signal. There may be provided a display 54 which is driven by the microcontroller 50. A keyboard 56 serves for controlling the calibration device 1.

For an automated calibration it may be advantageous to adapt the signal generator 21 in such a manner that it can generate a cue tone of a given frequency. This cue tone may be recorded before, after and between the first and the second calibration signal on the magnetic tape in order to detect the first and the second calibration signal. The calibration device 1 may then include a cue signal detector 58 for the detection of the cue signal.

The calibration is based on the assumption that there is a reference signal level range within which the signal level of the first calibration signal may be varied, and a reference ratio range within which the ratio between the signal levels of the reproduced first and second calibration signals should be situated. The calibration is first of all intended to ensure that the first calibration signal is recorded with such a write current that after reading the level of the reproduced first calibration signal is within said reference signal level range. Thus, some value within this reference signal level range may be chosen. Another possibility is that there is a certain reference value for the signal level of the first calibration signal, which reference value is within the reference signal level range. In that case the first calibration signal should be recorded with such a write current that after reading the signal level of the reproduced first calibration signal is substantially equal to the reference value. During the calibration the ratio between the signal levels of the reproduced first and the second calibration signal is determined likewise, and if necessary the write current is corrected so as to achieve that this ratio is within the reference ratio range.

Hereinafter, the explanation will be based on a first control of the write current for the first calibration signal such that the signal level of the subsequently read first calibration signal is substantially equal to the given reference value. As stated hereinbefore, this is not a necessity and the write current may also be controlled in such a manner that the signal level of the reproduced first calibration signal is within the reference signal level range without direct control towards a given reference value.

First of all, it will be described how the reference signal level range and the reference ratio range can be determined. One possibility to achieve this is to carry out a precalibration before the actual calibration is started. In this precalibration mode a test record carrier is loaded into the arrangement 2.

Figure 3 shows an example of such a test record carrier. Blocks B with test information have been recorded repeatedly on the test record carrier 60, of which only a part is shown. In a track (marked "track 8" in Figure 3) on one side (in Figure 3 this is the A side marked "A sector") of the test record carrier 60 the first calibration signal and then the second calibration signal is recorded in the block B. In Figure 3 the block portion BP4 contains the first calibration signal represented by the dashed line. This calibration signal is the digital signal having a frequency of 9.6 kHz. The block portion BP6 contains the second calibration signal represented by the dotted line. This signal is the digital signal of 48 kHz. Before, after and between the block portions with the first calibration signal and the second calibration signal, respectively, the afore-mentioned cue tone is recorded. In the example of Figure 3 this is indicated by means of the oblique hatchings in the block portions BP3, BPS and the block portion BP1 of the next block. In the present example the cue tone is recorded on the record carrier over the whole width of side B. In this example the cue tone has a frequency of 6.25 kHz.

The cue tone may be recorded only the sector A or the sector B, or over the whole width of the test record carrier. In Figure 3 a 48 kHz tone (represented by the broken-line hatching) is recorded in the A sector in addition to the cue tone (represented by the solid hatching) in the B sector. The 48 kHz tone may serve to test the sensitivity of the calibrator.

Moreover, a third calibration signal is recorded in the block portion BP2 in two tracks, *i.e.* the tracks marked "track 0" and "track 8". These tracks are shown as solid lines in the block portion BP2. They comprise the two outer tracks on side A of the record carrier. In the present example the third calibration signal is a digital signal having a frequency of 4.8 kHz, which is a frequency which can readily be derived by dividing the 96 kHz clock signal of Figure 6a. This block portion is intended to correct the position of the read head 7 relative to the tracks in such a manner that the gap of the magnetic head 7 has an optimum transverse orientation relative to the tracks. In that case the tracks will produce a maximal output signal. Therefore, the phase relationship between the two digital 4.8 kHz signals in the tracks marked "track 0" and "track 8" is such that if a read head 7 is used having a gap of such a width that both tracks are read simultaneously the azimuth of the gap of this read head is positioned correctly relative to the tracks when the output signal has a maximal value.

The length of the various block portions in Figure 3 are not shown to scale. Furthermore, it is to be noted that the length of the block portions is plotted on a time scale, which is the time required to read the various block portions at an increased speed, particularly a speed equal to 64 times the nominal playback speed of the record carrier. The block B may be repeated several times on the record carrier 60.

When it is assumed that the recording arrangement 2 is intended to produce prerecorded record carriers of the DCC type, one side of the record carrier 3 will contain 9 tracks, *i.e.* 18 tracks on both sides.

If the read head 7 is a single head having a head gap of adequate width to read all the tracks on sides A and B simultaneously, the test record carrier 60 merely has to be provided with the blocks B of Figure 3 and the precalibration has to be carried out only once. This one-time precalibration is then followed by a calibration of each of the tracks individually because the recording head 19 comprises 18 sub-heads for the simultaneous recording of the 18 tracks in order to produce the prerecorded record carriers.

However, if the read head 7 comprises a plurality of sub-heads, *i.e.* 18 in the example shown in Figure 3, a separate precalibration is necessary for each track, after which the calibration is also carried out for each individual track.

To enable the precalibration to be carried out for each individual track the record carrier 60 should also have blocks (not shown) which resemble the block B in Fig. 3 but where the first and the second calibration signal are recorded in the other tracks, *i.e.* the tracks marked "track 0" to "track 7" on the A side, and all the tracks on the B side.

It will be evident that the embodiment using a single read head 7 capable of reading all the tracks is of great advantage. First of all, the read head 7 can be a cheap and simple analog inductive read head of large dimensions in contrast with the far more complex and expensive heads of the MRH type which would be required to allow all the 18 tracks to be read separately. In addition, a one-time precalibration is required instead a precalibration for each of the 18 tracks, which significantly reduces the time needed for the total calibration process.

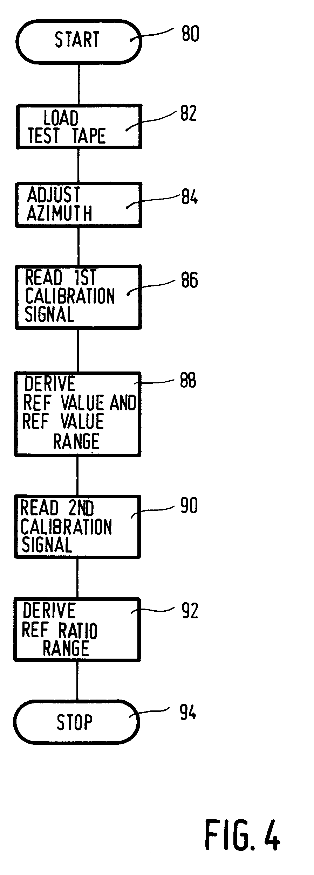

The precalibration will now be described in more detail with reference to the flow chart in Figure 4. The precalibration is started in block a 80. In a block 82 the test record carrier 60 is loaded into the arrangement 2, the read head 7 is positioned relative to the test record carrier at the position indicated in Figure 1, and the high transport speed is started. The cue signal detector 58 detects the cue signal having a length of 45 ms, as recorded in the block portion BP1. Under the influence of this signal the display 54 gives, for example, the indication "azimuth check". In a block 84 the operator now has a time interval of 60 s for the correct adjustment of the azimuth of the read head 7, *i.e.* to a maximal value for the 307.2 kHz (64 x 4.8 kHz) signal read from the test record carrier. Subsequently, the calibration device detects the 30 ms cue tone in the block portion BP3 by means of the detector 58. In response thereto a switching signal is applied to the switch S, which is then set to position *a-c*. The first calibration signal recorded in the block portion BP4 is now read, see block 86, and the signal level is determined in the level detector formed by the detector 44 and the A/D converter 46. The signal level thus determined is stored as a reference signal level in a memory (not shown) in the microcontroller 50. This reference signal level can also be utilised to derive a reference signal level range, see block 88.

This reference signal level range may, for example, be laid down in a standard (for example the DCC standard) and may be, for example, ± 4 dB relative to a given value referred to as "0 dB". If the above-mentioned reference signal level corresponds to this "0 dB" level this will mean that the reference signal level range is ± 4 dB around the measured reference value. If it is known that the signal level of the first calibration signal in the block portion BP4 on the test record carrier 60 has a deviation of x dB relative to the 0 dB level, this will mean that the reference signal level range extends from -4-x dB to 4-x dB around the measured reference value.

Subsequently, the detector 58 detects the 15 ms cue signal in the block portion BP5. Under the influence of the detection signal applied to the microcontroller 50 by the detector 58 a switching signal is generated, as a result of which the switch S is set to position *b-c*. The second calibration signal recorded in the block portion BP6 is now read out, see block 90, and the signal level is determined in the level detector formed by the detector 44 and the A/D converter 46. From the resulting signal level for the second calibration signal and the signal level for the first calibration signal, determined in the block 88, a ratio is determined. Subsequently, a reference ratio range is derived from this ratio and is stored in a memory (not shown) in the microcontroller 50, see block 92.

The reference ratio range can be determined as follows. The reference ratio range may, for example, be laid down in a standard (for example the DCC standard) and may, for example, lie between - 2 dB and + 4 dB relative to a given ratio referred to as "0 dB". If the above-mentioned measured ratio corresponds to this "0 dB" level this will mean that the reference ratio range is within - 2 dB and + 4 dB around the measured ratio. If it is known that for the test record carrier used the ratio for the signal levels of the two calibration signals in the block portions BP4 and BP6 on the test record carrier 60 has a deviation of, for example, z dB relative to the 0 dB level, this will mean that the reference ratio range extends from -2-z dB to 4-z dB around the measured ratio.

After this, the precalibration step stops, see block 94.

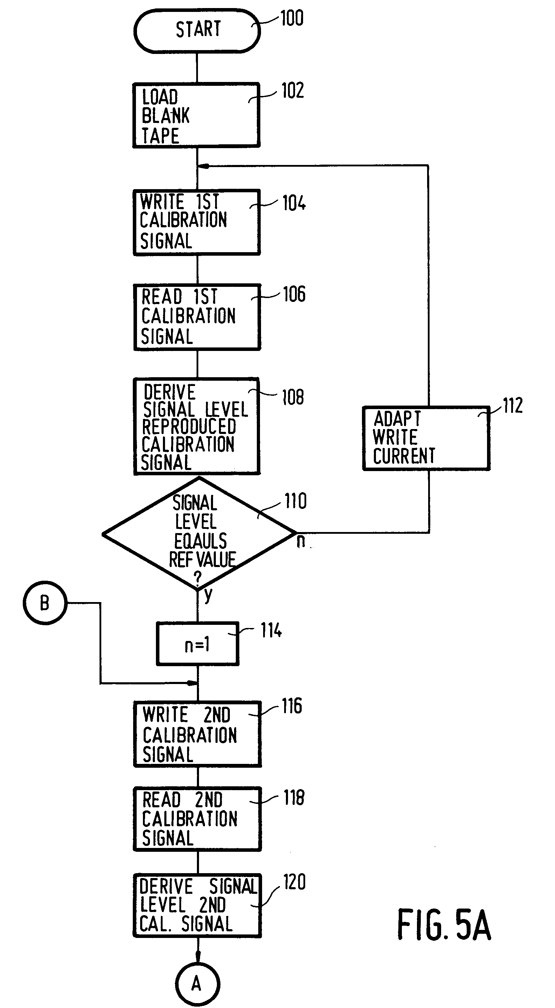

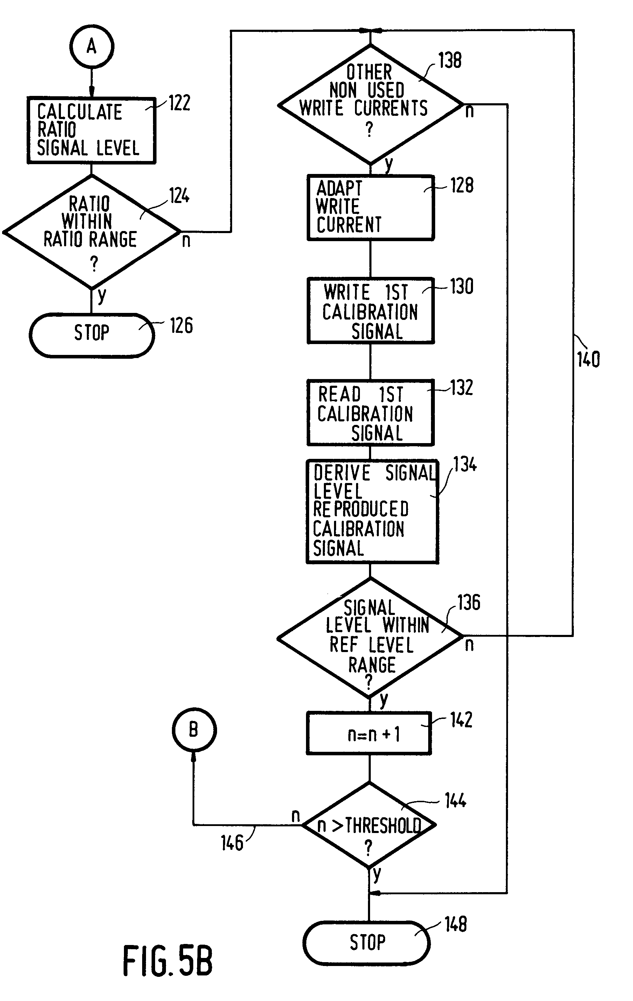

Now the calibration method for one of the tracks is carried out. This calibration will be described with reference to the embodiment shown in Figure 2 and with reference to Figures 5a and 5b, which each show a part of the flow chart of the method. The method starts in a block 100, where after removal of the test record carrier 60, a blank record carrier 3 is loaded into the arrangement 2, see block 102. The calibration device 1 now first generates such a control signal for the arrangement 2 that the cue signal generator 28 generates the cue signal which is inscribed in the record carrier for 45 ms. Subsequently, the calibration device 1 generates a first control signal on the output 9, in response to which the signal generator 21 generates the first calibration signal. Under the influence of a control signal supplied to the arrangement 2 by the calibration device 1 *via* the input 10 this first calibration signal is recorded in the record carrier 3 with a given amplitude determined by the control signal applied to the input 18 of the write amplifier 15, see block 104 in Figure 5a. The read head 7 first reads the cue signal and then the first calibration signal, the switch S being in the position *a-c.* The signal level is determined, see block 108 in Figure 5a, and the microcontroller 50 checks whether the signal level substantially corresponds to the reference signal level determined in the precalibration step, see block 110. If the signal level is not substantially equal to the reference signal level, the method proceeds *via* a block 112. The write current is adapted. The first calibration signal is now recorded again with the changed write current (the block 104) and is read (block 106), after which the signal level of the first calibration signal read from the record carrier is determined again (block 108). Thus, the write current is corrected until the measured signal level is substantially equal to the reference signal level, after which the method proceeds from the block 110 to a block 114. A count n is set to the value "1".

Subsequently, the calibration device 1 generates a control signal under the influence of which the generator 21 generates the 30 ms cue signal, which is recorded in the record carrier 3. The calibration device 1 further generates a second control signal, which is applied to the arrangement 2 *via* the input 10. Under the influence of this signal the generator 21 generates the second calibration signal, which is subsequently recorded in the record carrier 3 with the last write current setting, see block 116 in Figure 5a. Upon detection of the 30 ms cue signal by the detector 58 the switch S is set to the position *b-c*, so that the second calibration signal is read, see block 118, and its signal level can be detected, see block 120 in Figure 5a. The method proceeds with block 122 in Figure 5b, in which the ratio between the signal levels of the two calibration signals is determined. Subsequently, it is ascertained in block 124 whether this ratio is within the reference ratio range as determined in the precalibration step. If this is the case the calibration of the arrangement is correct and the calibration method stops in block a 126. However, if this is not the case the method is continued *via* a block 128, in which the write current is adapted. The write current is adapted in such a manner that, if the first calibration signal is recorded with this adapted write current, the signal level of the subsequently read first calibration signal is within the reference signal level range determined in the precalibration step. For this purpose the loop in the program in Fig. 5b, formed by blocks 130, 132, 134, 136, the path 140 and a block 138, has been provided. The function of the block 138 will be described in more detail later on.

With the write current adapted in the block 128, for which the answer in the block 136 is affirmative the program proceeds *via* a block 142, in which the count n is incremented by "1". If the count n does not exceed a given threshold value the program proceeds *via* the path 146 to the block 116 in Figure 5a, in which the second calibration signal is recorded again with the adapted write current.

It may occur that a repeated adaptation of the write current in the block 128 does not yield a ratio within the reference ratio range. If this occurs the conclusion may be drawn that calibration is impossible for whatever reason. It is then decided to discontinue calibration. This is in fact effected in a block 144. The threshold value in fact dictates the number of times that a calibration attempt is repeated. Calibration is then discontinued after a number of attempts corresponding to this threshold. The controller 50 may then generate an indication "error, calibration aborted" on the display 54.

Furthermore, it may occur that all possible write current values have been used which yield a first calibration signal for which the signal level is within the reference level range. If these values have not resulted in a successful calibration for the second calibration signal calibration is also aborted. This is effected in the block 138 in Fig. 5b. In this case the microcontroller 50 can again give the message "error, calibration aborted" on the display 54.

After termination of the calibration method the calibration of arrangement 2 is correct as regards the drive of the write head 19. The final value of the write current for this head is stored in the arrangement so that the head 19 is driven with this write current during normal use of the arrangement 2 for the production of prerecorded record carriers. The microcontroller 50 can now display a message "head (number) calibrated" on the display 54. Which write head has been calibrated can then be indicated at the location between the parentheses.

The calibration method as described with reference to Figures 5a and 5b can subsequently be repeated for each of the other heads provided in addition to the head 19 in the arrangement 2 and intended for recording information in one of the other tracks on the record carrier 3.

Consequently, if the arrangement 2 is intended for the production of record carriers of the DCC type the method should be repeated 17 more times, *i.e.* one time for each of the 17 other recording heads in the recording-head device 6.

It will be evident that the calibration for a head such as the write head 19 can be effected automatically. It is even possible to calibrate all the 18 write heads automatically after one another.

As already stated, the reference signal value is not strictly necessary. It is for example possible to use only the reference signal level range of the block 136 in Figure 5b. This reference signal level range may also be used already in the block 110. In that case the program will proceed to the block 142 if the signal level of the reproduced first calibration signal is within the reference signal level range and the program will proceed *via* the block 112 if it is not within this range. The precalibration step as indicated in Figure 4 will then also be different. In particular, no reference signal value will then be determined in the block 88.

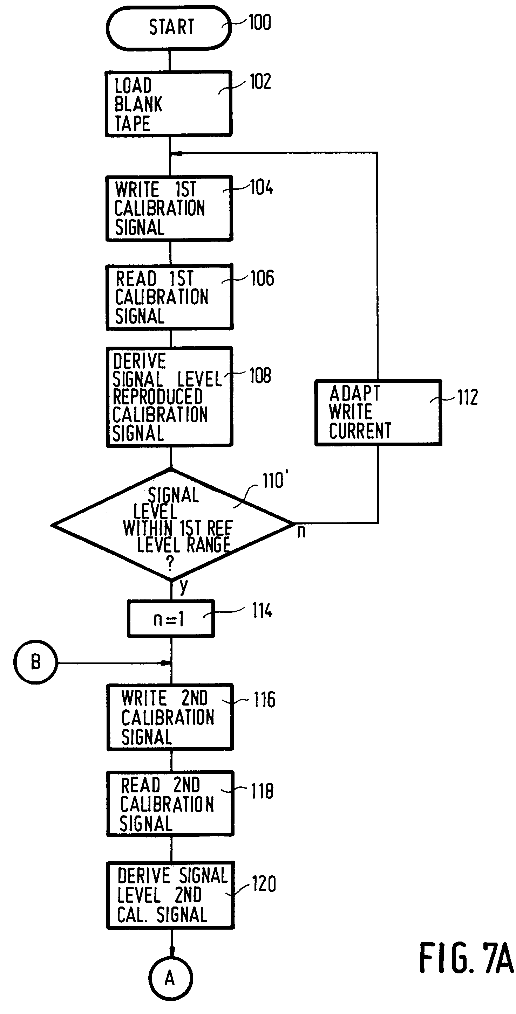

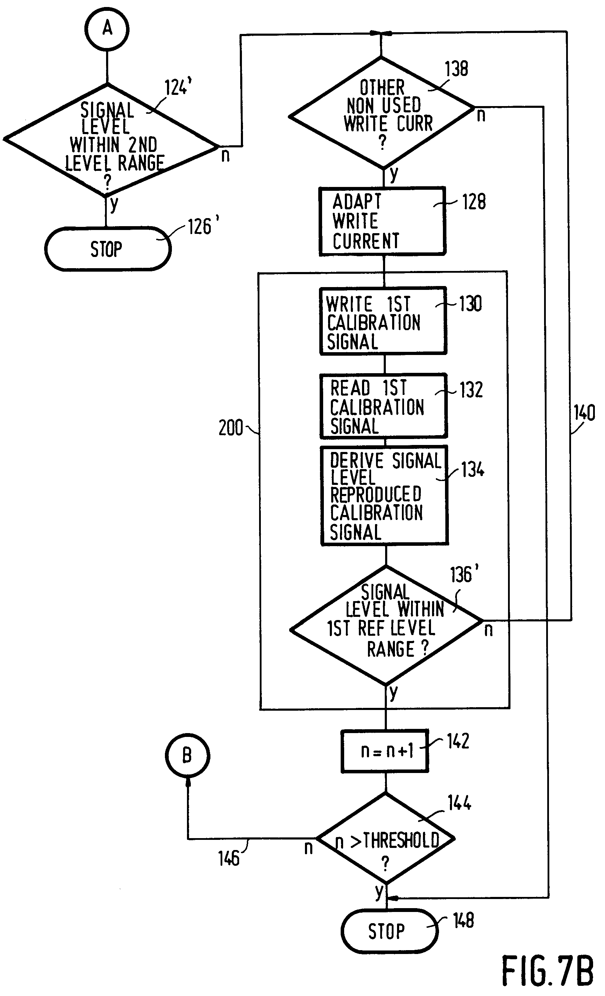

Hereinafter, a second embodiment of the invention will be described briefly. For this, reference is made to the parts of a flow chart shown in Figures 7a and 7b. The flow chart of Figures 7a and 7b bears much resemblance to the flow chart of Figures 5a and 5b. The part shown in Figure 7a does not differ significantly from the part shown in Figure 5a. The only difference is that in a block 110' the signal level of the first calibration signal reproduced from the record carrier should be within a first reference signal level range. The first reference signal level range is the same as the reference signal level range in the block 136 in Figure 5b. This reference signal level range can thus be obtained in the same way by means of the test record carrier in a manner as described hereinbefore.

After the second calibration signal has been recorded in the record carrier with the same write current as that with which the first calibration signal has been recorded the last time, see the block 116 in Figure 7a, this calibration signal is again read out and the reproduced signal level is determined, see the blocks 118 and 120 in Figure 7a. Subsequently, it is ascertained in a block 124' in Figure 7b whether the signal level of the reproduced second calibration signal is within a second reference signal level range. This second reference signal level range can be obtained in the same way by means of the test record carrier as described hereinbefore for deriving the first reference signal level range.

If the level is within said second range the program stops in the block 126. If this is not the case the program proceeds *via* the block 138 to the block 128, where the write current can be adjusted to another value. The steps represented by a block 200, including the path 140, may be necessary to determine whether, during recording of the first calibration signal with the newly adjusted write current, the signal level of the subsequently read first calibration signal is within the first reference signal level range. If it is already known which values the write current may have to meet the requirement the steps in the block 200 may be omitted.

Subsequently, the program proceeds, *via* the blocks 142 and 144, to the block 116 in Figure 7a, so that the second calibration signal can be recorded with the newly adjusted write current. The operation of the program is further similar to that of the program in Figures 5a and 5b.

Various modifications from what has been described above are possible without thereby departing from the scope of the invention.

In the above embodiment, for example, the signal generator 21 and the control signal generator 22 are included in the recording arrangement 2. This is not necessary. As an alternative these parts may be included in the calibration device 1. Moreover, different variants of the test record carrier 60 are possible. It may be then be envisaged to record the various signals in all the tracks and not alone in the "track 8".

Thus, the invention relates to a calibration system comprising a calibration device for calibrating a recording arrangement. The recording arrangement is intended for the production of prerecorded record carriers in tape form and for this purpose it has a recording head for recording information in a track on the record carrier. To this end a blank record carrier is moved at a high speed from a supply reel to a take-up reel past the recording head. Write means have been provided to generate a write current for the recording head. The calibration device has a read head for reading information from the track on the record carrier and it comprises detection means for detecting the signal level of the information reproduced from the record carrier, and control signal generator means for the generation of a control signal in dependence on the signal level and applying the control signal to the write means in order to control the write current from the write means to the recording head.

Generator means are provided for the generation of a first calibration signal having a given first frequency value and for the generation of a second calibration signal having a given second frequency value unequal to the first frequency value. The write current for recording the first calibration signal is controlled in such a manner that the first calibration signal recorded with this write current and subsequently reproduced has a signal level which is substantially equal to a reference signal level within a first reference signal level range. Subsequently, the second calibration signal is recorded with the write current thus adjusted and is then reproduced again.

In a first embodiment it is checked whether the ratio between the signal levels of the reproduced first and second calibration signals is within a given reference ratio range. If this the case the calibration is stopped. If this is not the case the write current is adapted in such a manner that the signal level of the reproduced first calibration signal recorded with the adapted write current is within the first reference signal level range. Subsequently, the second calibration signal is written with the adapted write current and is read again. Now it is ascertained whether the ratio between the signal levels is within the reference ratio range.

In a second embodiment it is checked whether the signal level of the reproduced second calibration signal is within a second reference signal level range. If this the case the calibration is stopped. If this is not the case the write current is adapted in such a manner that the signal level of the first calibration signal, if recorded again with the adapted write current and subsequently reproduced, would still be within the first reference signal level range. Subsequently, the second calibration signal is written with the adapted write current and is read again. Again it is ascertained whether the signal level of the second calibration signal is within the second reference signal level range.

### Documents describing the prior art

(1) European Patent Application no. 455,293 A1 (PHN 13.314)
(2) European Patent Application no. 456,299 A1 (PHN 13.315)

## Claims

1. A calibration system comprising a calibration device and a recording arrangement, the calibration device being adapted to calibrate the recording arrangement, and the recording arrangement being adapted to produce prerecorded record carriers in tape form and comprising for this purpose a recording head for recording information in a track on the record carrier, the recording arrangement further comprising a take-up reel and a supply reel, transport means for the transport of the record carrier from the supply reel to the take-up reel past the recording head, and write means for generating a write current for the recording head, the calibration device comprising a read head for reading information in the track on the record carrier, detection means for detecting the signal level of the information reproduced from the record carrier, and control signal generator means for generating a control signal in dependence on the signal level and for applying the control signal to the write means, in order to control the write current from the write means to the recording head, characterised in that the calibration system comprises generator means for generating a first calibration signal having a given first frequency value and for generating a second calibration signal having a given second frequency value unequal to the first frequency value, in response to a first control signal and a second control signal, respectively, from the calibration device,
in that in a calibration mode,
(a) viewed in the transport direction of the record carrier, the read head is brought into read contact with the record carrier downstream of the recording head,
(b1) the recording arrangement is adapted to record the first calibration signal in the track on the record carrier in response to the first control signal,
(b2) the calibration device is adapted to read the first calibration signal recorded in the track,
(b3) the detection means in the calibration device are adapted to detect the signal level of the first calibration signal read from the track, in order to generate the control signal in dependence on the signal level of the first calibration signal read from the track,
(b4) in that the calibration device is adapted to control the write current in dependence on the control signal in such a manner that the signal level of the first calibration signal read from the track is within a reference signal level range,
(c1) the recording arrangement is adapted to record the second calibration signal, with the write current thus adjusted, in the track on the record carrier in response to the second control signal,
(c2) the calibration device is adapted to read the second calibration signal recorded in the track,
(c3) the detection means in the calibration device are adapted to detect the signal level of the second calibration signal read from the track, and to detect whether the ratio between the signal level of the second calibration signal read from the track and the final signal level of the first calibration signal read from the track is within a reference ratio range,
(d1) that the calibration device is further adapted to generate again a first control signal in the case that the ratio is outside the reference ratio range,
(d2) the calibration device is adapted to adjust the write current in dependence on the control signal,
(d3) the recording arrangement is adapted to re-record the first calibration signal in the track with the adjusted write current,
(d4) in that the adjusted write current is such that the signal level of the first calibration signal which is again read from the track has another value than the first-mentioned final value and lies within the reference signal level range,
(d5) in that the calibration device is adapted to read the first calibration signal recorded with the adjusted write current,
(d6) the detection means are adapted to detect the signal level of this first calibration signal read from the track,
(e) in that the calibration system is adapted to proceed with the calibration mode from step (c1),
(f) in that the calibration device is further adapted to terminate the calibration mode for the track in the case that the ratio is within the reference ratio range.

2. A calibration system as claimed in Claim 1, characterised in that the calibration device is adapted to adjust the write current in the step (b4) in dependence on the control signal in such a manner that the signal level of the first calibration signal read from the track substantially corresponds to a reference signal value within the reference signal level range.

3. A calibration system as claimed in Claim 1 or 2, comprising a recording arrangement for the recording of information in at least a second track on the record carrier, characterised in that the calibration device is adapted to repeat the calibration mode for the at least second track.

4. A calibration system as claimed in Claim 1, 2 or 3, characterised in that the calibration device is adapted to read a test record carrier in a precalibration mode, in which test record carrier the first calibration signal and the second calibration signal have been recorded, in that the detection means in the calibration device are adapted to detect the signal level of the first calibration signal read from a track on the test record carrier, to derive from the detected signal level values which are characteristic of the reference signal level range and to store these values, in that the detection means in the calibration device are further adapted to detect the signal level of the second calibration signal read from a track on the record carrier, to derive from the detected signal levels of the first and the second calibration signal values which are characteristic of the reference ratio range and to store these values.

5. A calibration system as claimed in Claim 4 where appendant to Claim 2, characterised in that the detection means are adapted to derive the reference signal value from the detected signal level of the first calibration signal.

6. A calibration system as claimed in Claim 4 or 5, the read head comprising at least two read sub-heads, each for reading a track on a record carrier, and the test record carrier having at least two tracks for cooperation with the at least two read sub-heads, each track containing the first and the second calibration signal, characterised in that the calibration device is adapted to repeat the precalibration mode for the at least second track.

7. A calibration system as claimed in any one of the Claims 1 to 5, characterised in that the read head in the calibration device is a read head for reading all the tracks on one side of a record carrier.

8. A calibration system as claimed in Claim 4, 5, 6 or 7, where appendant to Claim 4, characterised in that the test record carrier has a third calibration signal of a third frequency recorded in at least two tracks provided on one side of the record carrier, and in that the calibration device is adapted to read the third calibration signal in the at least two tracks in an azimuth adjustment mode prior to the precalibration mode, in order to adjust the azimuth of the read head to a nominal azimuth value.

9. A calibration system as claimed in Claim 8, characterised in that the at least two tracks extend at the two outermost edges of the side of the record carrier.

10. A calibration system as claimed in any one of the Claims 1 to 9, characterised in that the calibration device is adapted to count the number of times that the calibration mode has been carried out from step (c1), and to stop the calibration mode if this number exceeds a given value.

11. A calibration system as claimed in any one of the Claims 1 to 10, characterised in that the generator means are included in the recording arrangement.

12. A calibration system as claimed in any one of the Claims 1 to 11, characterised in that the first frequency is lower than the second frequency.

13. A calibration system comprising a calibration device and a recording arrangement, the calibration device being adapted to calibrate the recording arrangement, and the recording arrangement being adapted to produce prerecorded record carriers in tape form and comprising for this purpose a recording head for recording information in a track on the record carrier, the recording arrangement further comprising a take-up reel and a supply reel, transport means for the transport of the record carrier from the supply reel to the take-up reel past the recording head, and write means for generating a write current for the recording head, the calibration device comprising a read head for reading information in the track on the record carrier, detection means for detecting the signal level of the information reproduced from the record carrier, and control signal generator means for generating a control signal in dependence on the signal level and for applying the control signal to the write means, in order to control the write current from the write means to the recording head, characterised in that the calibration system comprises generator means for generating a first calibration signal having a given first frequency value and for generating a second calibration signal having a given second frequency value unequal to the first frequency value, in response to a first control signal and a second control signal, respectively, from the calibration device,
in that in a calibration mode,
(a) viewed in the transport direction of the record carrier, the read head is brought into read contact with the record carrier downstream of the recording head,
(b1) the recording arrangement is adapted to record the first calibration signal in the track on the record carrier in response to the first control signal,
(b2) the calibration device is adapted to read the first calibration signal recorded in the track,
(b3) the detection means in the calibration device are adapted to detect the signal level of the first calibration signal read from the track, in order to generate the control signal in dependence on the signal level of the first calibration signal read from the track,
(b4) the calibration device is adapted to control the write current in dependence on the control signal in such a manner that the signal level of the first calibration signal read from the track is within a first reference signal level range,
(c1) in that the recording arrangement is adapted to record the second calibration signal, with the write current thus adjusted, in the track on the record carrier in response to the second control signal,
(c2) the calibration device is adapted to read the second calibration signal recorded in the track,
(c3) the detection means in the calibration device are adapted to detect the signal level of the second calibration signal read from the track, and to detect whether the signal level of the second calibration signal read from the track is within a second reference signal level range,
(d1) in that the calibration device is further adapted to generate again a first control signal in the case that the signal level of the reproduced second calibration signal is outside the second reference signal level range,
(d2) the calibration device is adapted to adjust the write current in dependence on the control signal,
(d3) the adjusted write current is such that, if the first calibration signal were again recorded with the adjusted write current, the signal level of the first calibration signal which is again read from the track would have another value than the first-mentioned final value but would lie within the first reference signal level range,
(e) in that the calibration system is adapted to proceed with the calibration mode from step (c1),
(f) in that the calibration device is further adapted to terminate the calibration mode for the track in the case that the signal level of the reproduced second calibration signal is within the second reference signal level range.

14. A recording arrangement suitable for use in the calibration system as claimed in any one of the preceding Claims, having those characteristic features of the calibration system which characterise the recording arrangement.

15. A calibration device suitable for use in the calibration system as claimed in any one of the Claims 1 to 13, having those characteristic features of the calibration system which characterise the calibration device.

16. A test record carrier suitable for use in the calibration system as claimed in any one of the Claims 4 to 9, having those characteristic features of the calibration system which characterise the test record carrier.

17. A test record carrier as claimed in Claim 16, characterised in that one side of the record carrier is provided with blocks which succeed one another, each block having a first block portion containing the first calibration signal recorded in a track and a second block portion containing the second calibration signal recorded in the same track.

18. A test record carrier as claimed in Claim 17, characterised in that each block has a third block portion containing the third calibration signal recorded in two adjacent tracks.

19. A test record carrier as claimed in Claim 18, characterised in that the third block portion in a block precedes the first block portion.

20. A test record carrier as claimed in Claim 19, characterised in that an interblock gap is provided between the block portions in the blocks.

21. A test record carrier as claimed in Claim 20, characterised in that the length of the interblock gap between the third and the first block portion, between the first and the second block portion, and between the third block portion of a block and the first block portion of a next block is unequal.

22. A test record carrier as claimed in Claim 21, characterised in that the length of the interblock gap before the third block portion is greater than the length of the interblock gap between the third and the first block portion, and in that this interblock gap, in its turn, is longer than the interblock gap between the first and the second block portion.

23. A method of calibrating the write current in a recording arrangement by means of a calibration device, the recording arrangement comprising write means having a recording head for recording information in a track on a record carrier, the record carrier being moved from a supply reel to a take-up reel past the recording head, and a write current being generated to drive the recording head, the calibration device comprising a read head for reading information in the track on the record carrier, detection means for detecting the signal level of the information reproduced from the record carrier, and control signal generator means for generating a control signal in dependence on the signal level and for applying the control signal to the write means, in order to control the write current to the recording head,
characterised in that the calibration system generates a first calibration signal having a given first frequency value and a second calibration signal having a given second frequency value unequal to the first frequency value, in response to a first control signal and a second control signal, respectively, from the calibration device,
in that in a calibration mode the following steps are carried out:
(a) viewed in the transport direction of the record carrier, the read head is brought into read contact with the record carrier downstream of the recording head,
(b1) the first calibration signal is recorded in the track on the record carrier in response to the first control signal, (b2) the calibration device reads the first calibration signal recorded in the track,
(b3) the signal level of the first calibration signal read from the track is detected by the detection means, and the control signal is generated in dependence on the signal level of the first calibration signal read from the track,
(b4) the write current is adjusted in dependence on the control signal in such a manner that the signal level of the first calibration signal read from the track is within a reference signal level range,
(c1) the second calibration signal is recorded, with the write current thus adjusted, in the track on the record carrier in response to the second control signal,
(c2) the second calibration signal recorded in the track is read by the calibration device,
(c3) the signal level of the second calibration signal read from the track is detected by the detection means, the ratio between the signal level of the second calibration signal read from the track and the final signal level of the first calibration signal read from the track is determined and it is ascertained whether the ratio is within a reference ratio range,
(d1) in that, in the case that the ratio is outside the reference ratio range,
(d2) the write current is adjusted,
(d3) the first calibration signal is re-recorded in the track with the adjusted write current,
(d4) in that the adjusted write current is such that the signal level of the first calibration signal which is again read from the track has another value than the first-mentioned final value and lies within the reference signal level range,
(d5) in that the first calibration signal recorded with the adjusted write current is read out,
(d6) the signal level of this first calibration signal read from the track is detected,
(e) in that the calibration mode proceeds from step (c1),
(f) in that the calibration mode for the track is terminated in the case that the ratio is within the reference ratio range.

24. A method as claimed in Claim 23, characterised in that the write current is adjusted in the step (b4) in dependence on the control signal in such a manner that the signal level of the first calibration signal read from the track substantially corresponds to a reference signal value within the reference signal level range.

25. A method as claimed in Claim 23 or 24, in which the recording arrangement records information in at least a second track on the record carrier, characterised in that the calibration mode is repeated for the at least second track.

26. A method as claimed in Claim 23, 24 or 25, characterised in that a precalibration mode is carried out, for which a test record carrier is used in which the first calibration signal and the second calibration signal have been recorded, in that the test record carrier is loaded into the recording arrangement, in that the first calibration signal is read from a track, in that the signal level of the first calibration signal read from this the track on the test record carrier is determined, from which values are derived which are characteristic of the reference signal level range, which values are stored, in that the signal level of the second calibration signal read from a track on the record carrier is detected, and from the detected signal values of the first and the second calibration signal values are derived which are characteristic of the reference signal level range, which values are also stored.

27. A method as claimed in Claim 26 where appendant to Claim 24, characterised in that the reference signal value is derived from the detected signal level of the first calibration signal and is stored.

28. A method as claimed in Claim 26 or 27, the read head comprising at least two read sub-heads with which at least two tracks on a record carrier are read, and the test record carrier having at least two tracks for cooperation with the at least two read sub-heads, each track containing the first and the second calibration signal, characterised in that the precalibration mode is repeated for the at least second track.

29. A method as claimed in Claim 23, characterised in that the number of times that the calibration mode has been carried out from step (c1) is counted, and in that the calibration mode is stopped if this number exceeds a given value.

30. A method as claimed in any one of the preceding Claims, characterised in that the first frequency is lower than the second frequency.

31. A method of calibrating the write current in a recording arrangement by means of a calibration device, the recording arrangement comprising write means having a recording head for recording information in a track on a record carrier, the record carrier being moved from a supply reel to a take-up reel past the recording head, and a write current being generated to drive the recording head, the calibration device comprising a read head for reading information in the track on the record carrier, detection means for detecting the signal level of the information reproduced from the record carrier, and control signal generator means for generating a control signal in dependence on the signal level and for applying the control signal to the write means, in order to control the write current to the recording head,
characterised in that the calibration system generates a first calibration signal having a given first frequency value and a second calibration signal having a given second frequency value unequal to the first frequency value, in response to a first control signal and a second control signal, respectively, from the calibration device,
in that in a calibration mode the following steps are carried out:
(a) viewed in the transport direction of the record carrier, the read head is brought into read contact with the record carrier downstream of the recording head,
(b1) the first calibration signal is recorded in the track on the record carrier in response to the first control signal,
(b2) the calibration device reads the first calibration signal recorded in the track,
(b3) the signal level of the first calibration signal read from the track is detected by the detection means, and the control signal is generated in dependence on the signal level of the first calibration signal read from the track,
(b4) the write current is adjusted in dependence on the control signal in such a manner that the signal level of the first calibration signal read from the track is within a first reference signal level range,
(c1) the second calibration signal is recorded, with the write current thus adjusted, in the track on the record carrier in response to the second control signal,
(c2) the second calibration signal recorded in the track is read by the calibration device,
(c3) the signal level of the second calibration signal read from the track is detected by the detection means, the signal level of the second calibration signal read from the track is determined and it is ascertained whether the signal level is within a second reference signal level range,
(d1) in that, in the case that the signal level of the second calibration signal is outside the second reference signal level range,
(d2) the write current is adjusted,
(d3) in that the adjusted write current is such that, if the first calibration signal were again recorded with the adjusted write current, the signal level of the first calibration signal when read again would have another value than the first-mentioned final value but would lie within the first reference signal level range,
(e) in that the calibration mode proceeds from step (c1),
(f) in that the calibration mode for the track is terminated in the case that the signal level of the reproduced second calibration signal is within the second reference signal level range.
